Europäisches Patentamt

European Patent Office

Office européen des brevets

(11) Veröffentlichungsnummer: **0 502 046 B1**

(19)

(12) **EUROPÄISCHE PATENTSCHRIFT**

(45) Veröffentlichungstag der Patentschrift: **21.12.94**

(51) Int. Cl.5: **C08F 2/26**

(21) Anmeldenummer: **90917331.2**

(22) Anmeldetag: **22.11.90**

(86) Internationale Anmeldenummer:
**PCT/EP90/01988**

(87) Internationale Veröffentlichungsnummer:
**WO 91/08236 (13.06.91 91/13)**

(54) **VERWENDUNG VON SALZEN VON SULFONIERTEN ALKENYL- BZW. ALKENYL(POLY)OXYALKYL-PHOSPHATEN ALS EMULGATOREN FÜR DIE EMULSIONSPOLYMERISATION.**

(30) Priorität: **01.12.89 DE 3939839**

(43) Veröffentlichungstag der Anmeldung:
**09.09.92 Patentblatt 92/37**

(45) Bekanntmachung des Hinweises auf die
Patenterteilung:
**21.12.94 Patentblatt 94/51**

(84) Benannte Vertragsstaaten:
**BE DE**

(56) Entgegenhaltungen:
**EP-A- 0 004 062**
**EP-A- 0 026 932**
**EP-A- 0 244 841**
**DE-A- 3 802 815**

(73) Patentinhaber: **Henkel Kommanditgesellschaft auf Aktien**

**D-40191 Düsseldorf (DE)**

(72) Erfinder: **MÜLLER-BORGES, Joachim**
**Marderstrasse 83**
**D-4019 Monheim (DE)**
Erfinder: **HÖFER, Rainer**
**Klever Strasse 31**
**D-4000 Düsseldorf 30 (DE)**
Erfinder: **FABRY, Bernd**
**Danziger Strasse 31**
**D-4052 Korschenbroich (DE)**

**Beschreibung**

Die Erfindung betrifft die Verwendung von Salzen von sulfonierten Alkenyl- bzw. Alkenyl(poly)oxyalkyl-phosphaten der Formel I

$$[R^1O\text{-}(C_nH_{2n}O)_x\text{-}][R^2O\text{-}(C_nH_{2n}O)_y\text{-}][R^3O\text{-}(C_nH_{2n}O)_z\text{-}]P = O \qquad (I)$$

in der
$R^1$ eine Gruppe der Formel II a bzw. II b

$$CH_3\text{-}(CH_2)_a\text{-}CH(OH)\text{-}(CH_2)_b\text{-}CH(SO_3M)\text{-}(CH_2)_c\text{-}CH_2\text{-} \qquad (IIa)$$

bzw.

$$CH_3\text{-}(CH_2)_a\text{-}CH(SO_3M)\text{-}(CH_2)_b\text{-}CH(OH)\text{-}(CH_2)_c\text{-}CH_2\text{-} \qquad (IIb)$$

oder ein durch Abspaltung eines Wassermoleküls aus der Gruppe der Formel IIa bzw. IIb gebildeter Rest ist,
$R^2$ und $R^3$, die gleich oder verschieden sein können, Wasserstoff oder einen Rest mit der für die Gruppe $R^1$ angegebenen Definition,
n die Zahl 2 und/oder 3,
x, y und z, die gleich oder verschieden sein können, Zahlen im Bereich von 0 bis 100, insbesondere von 0 bis 30,
a, b und c Zahlen im Bereich von 0 bis 18, wobei die Summe von a, b und c eine Zahl im Bereich von 12 bis 18 ist, und
M ein Alkali- oder Ammoniumion oder ein Äquivalent eines Erdalkaliions
bedeuten, als Emulgatoren für die Emulsionspolymerisation.

Als Emulgatoren für die Emulsionspolymerisation olefinische Doppelbindungen aufweisender, polymerisierbarer Monomere sind verschiedene ionische oder nicht-ionische Emulgatoren beschrieben worden, z.B. Alkylarylsulfonate, Nonylphenol-ethoxylate und Ethylenoxid/Propylenoxid-Blockcopolymere, vgl. Technische Broschüre RES/VVX/4 (G), 3. Ausgabe, 1976, Herausgeber: Shell-Chemie, alpha-Sulfofettsäureester, vgl. DE-A 33 39 407, tertiäre Hydroxyalkylamine, vgl. DE-A 33 37 640, Anlagerungsprodukte von Ethylenoxid an aliphatische vicinale Diole mit 8 bis 25 Kohlenstoffatomen, vgl. DE-A 33 19 782, Polyethylenoxy-sulfonate, vgl. EP-A 0 026 932, und Fettalkoholpolyethylenoxyphosphate, vgl. die Emulgatoren DISPONIL (R) AEP 5300, AEP 5325 und AEP 8100 der Firma Henkel KGaA, Düsseldorf.

Die vorgenannten Tenside zeigen bei ihrer Verwendung bei der Emulsionspolymerisation verschiedene Nachteile. So weisen z.B. die Polyethylenoxysulfonate gemäß EP 0 026 932 in sie enthaltenden wäßrigen Systemen eine starke Schaumbildung auf und sind zudem aufwendig herzustellen. Fettalkoholpolyethylen-oxyphosphate weisen nur wenig ausgeprägte Emulgatoreigenschaften auf und werden daher nur in größeren Einsatzkonzentrationen oder zusammen mit anderen, stärker wirksamen Emulgatoren eingesetzt.

Die Erfindung beruht auf der Erkenntnis, daß Salze von sulfonierten Alkenyl- bzw. Alkenyl(poly)oxyalkyl-phosphaten, die im folgenden der Kürze halber auch als Phosphatsulfonate bezeichnet werden, eine Gruppe von schaumarmen und auf leichte Weise herzustellenden Tensiden sind, die sich ausgezeichnet als Emulgatoren für die Emulsionspolymerisation eignen. Die Phosphatsulfonate der allgemeinen Formel I, die formal als Partial- oder Vollester der Phosphorsäure mit Sulfonaten ungesättigter Fettalkohole bzw. mit Sulfonaten von Anlagerungsprodukten von Ethylenoxid und/oder Propylenoxid an ungesättigte Fettalkohole angesehen werden können, sind aus der DE-A 38 02 815, auf deren Inhalt hier ausdrücklich Bezug genommen wird, bekannt. Sie können erhalten werden, indem man mit Fettalkoholen wie Oleyl-, Palmetoleyl-, Linoleyl-, Gadoleyl- und/oder Erucylalkohol bzw. in der Fettchemie üblicherweise eingesetzten technischen Gemischen derselben veresterte Phosphorsäure, die teilweise oder vollständig verestert sein oder als ein Gemisch von Partial- und Vollestern vorliegen kann, mit gasförmigem Schwefeltrioxid in hierfür geeigneten Reaktoren sulfoniert und die Sulfonierungsprodukte mit Basen neutralisiert. Dabei werden in die von den ungesättigten Fettalkoholen stammenden Kohlenwasserstoffreste innenständige Sulfonatgruppen eingeführt.

Die Struktur der erfindungsgemäß zu verwendenden Phosphatsulfonate der allgemeinen Formel I ist noch nicht abschließend geklärt. In Analogie zu sulfonierten Olefinen ist anzunehmen, daß pro Doppelbindung der ungesättigten Fettalkoholreste bei der Sulfonierung und der anschließenden Hydrolyse der Sulfonierungsprodukte eine Hydroxyl- und eine Sulfonatgruppe in die Alkylkette eingeführt wird, wobei sich Strukturen der allgemeinen Formel IIa und IIb ausbilden; aus diesen Strukturen kann durch Abspaltung eines Moleküls Wasser auch ein mit einer Sulfonatgruppe substituierter Alkenylrest gebildet werden. Möglicherweise liegt auch ein Gemisch der vorgenannten Verbindungen vor.

Die erfindungsgemäß einzusetzenden Phosphatsulfonate der allgemeinen Formel I eignen sich als Emulgatoren bei der Emulsionspolymerisation von nahezu sämtlichen technisch wichtigen, im wesentlichen wasserunlöslichen Monomeren. Typische Beispiele für diese Monomeren sind Vinylaromaten, z.B. Styrol, Divinylbenzol oder Vinyltoluol, polymerisierbare Olefine und Diolefine wie Propen, Butadien oder Isopren, Ester der Acryl- oder Methacrylsäure mit linearen oder verzweigten Alkoholen mit 1 bis 18 Kohlenstoffatomen, insbesondere von Alkoholen mit 1 bis 8 Kohlenstoffatomen und - besonders bevorzugt - von Methylestern, Ethylestern, Butylestern und Ethylhexylestern derselben, Vinylester von Säuren mit 2 bis 12 Kohlenstoffatomen, insbesondere Vinylacetat, Vinylpropionat, Vinyl-2-ethylhexanat und Vinyllaurat, Vinylalkylether mit 1 bis 8 Kohlenstoffatomen aufweisenden Alkylgruppen, Vinylchlorid, Vinylidenchlorid und dergleichen; die vorgenannten Monomeren können in Gegenwart der erfindungsgemäß einzusetzenden Phosphatsulfonate homopolymerisiert oder mit anderen der genannten Verbindungen aus der vorstehenden Aufzählung copolymerisiert werden. Weiterhin können Copolymerisationen durchgeführt werden, bei denen bis zu 50 Gew.-% weitere, an sich teilweise oder vollständig wasserlösliche Monomere beteiligt sind, z.B. Acrylnitril, Methacrylnitril, Halbester der Malein- bzw. Fumarsäure mit 1 bis 8 Kohlenstoffatomen, Acrylsäure, Methacrylsäure, Maleinsäure, Fumarsäure, Crotonsäure und/oder Itaconsäure. Ein typisches Beispiel für derartige Systeme ist ein Gemisch von Ethylhexylacrylat, Methylmethacrylat und (Meth)Acrylsäure.

Die unter Verwendung der Phosphatsulfonate der allgemeinen Formel I herzustellenden wäßrigen Dispersionen weisen in der Praxis 15 bis 75 Gew.-% polymerisierte Monomere (Trockenrückstand) in Wasser oder Wasser/wasserlöslichen organischen Lösemitteln auf. Bevorzugt ist der Bereich von 20 bis 60 Gew.-% Trockenrückstand; jedoch sind für spezielle Anwendungen auch wäßrige Dispersionen mit weniger als 15 Gew.-% Trockenrückstand herstellbar. Bei den vorgenannten Verfahren zur Emulsionspolymerisation können auch weitere übliche Polymerisationshilfsstoffe eingesetzt werden, insbesondere Initiatoren, z.B. anorganische Peroxidverbindungen wie Kalium- oder Ammoniumpersulfat oder Wasserstoffperoxid; weiterhin organische Peroxidverbindungen oder organische Azoverbindungen, soweit diese für die Emulsionspolymerisation verwendbar sind. Die Initiatoren werden in üblichen Mengen, d.h. von 0,05 bis 2 Gew.-%, vorzugsweise von 0,1 bis 0,5 Gew.-% eingesetzt. Weitere geeignete Hilfsstoffe sind Puffersubstanzen, z.B. Natriumhydrogencarbonat, Natriumpyrophosphat oder Natriumacetat, die in Mengen von bis zu 2 Gew.-% eingesetzt werden können. Auch Beschleuniger wie Formaldehydsulfoxylat können eingesetzt werden. Weiterhin können übliche, bei der Emulsionspolymerisation verwendete Molekulargewichtsregler, z.B. Butenol oder auch organische Thioverbindungen wie Mercaptoethanol, Thioglycolsäure, Octylmercaptan oder tert.-Dodecylmercaptan verwendet werden. Für die Durchführung der Polymerisationsverfahren kommen verschiedene, üblicherweise bei der Emulsionspolymerisation angewandte Methoden in Betracht, z.B. eine Gesamtvorlage aller Reaktanden, ein Monomerenzulauf oder ein Emulsionszulauf. Im allgemeinen wird dazu die Temperatur des Polymerisationsmediums in einem Bereich von 40 bis 100, insbesondere 50 bis 90 °C, gehalten. Als pH-Wert wird zweckmäßigerweise ein Bereich zwischen 3 und 9 eingehalten, jedoch ist dank der Unverseifbarkeit der Sulfonatgruppen mit den erfindungsgemäßen Verbindungen auch eine Emulsionspolymerisation bei niedrigeren pH-Werten möglich.

Die vorgenannten Verfahren zur Emulsionspolymerisation werden zweckmäßigerweise in kühl- und heizbaren, mit Rührer und Temperaturmeßeinrichtung versehenen Behältern, z.B. in Rührdruckkesseln, durchgeführt. Ebenfalls möglich ist die Verwendung von Rohrschlangenreaktoren oder sogenannten Loop-Reaktoren.

Nach Beendigung der Polymerisation wird die Polymerisatdispersion zweckmäßigerweise abgekühlt und über Siebeinrichtungen aus dem Reaktor entfernt. Falls die Reaktionsprodukte als Festprodukte isoliert werden sollten, wird die Polymerisatdispersion zweckmäßigerweise ausgefällt oder sprühgetrocknet. Bevorzugt ist jedoch eine direkte Verwendung der bei der Polymerisation erhaltenen Dispersionen als Bindemittel für Farben, Klebstoffe, Papierstreichmassen und andere Beschichtungsmittel.

Weitere Bedingungen für Verfahren zur Emulsionspolymerisation unter Verwendung der erfindungsgemäß einzusetzenden Phosphatsulfonate der allgemeinen Formel I können von dem Fachmann in üblicher Weise an die jeweiligen Erfordernisse angepaßt oder frei gewählt werden. Das allgemeine Fachwissen auf dem Gebiet der Emulsionspolymerisation ergibt sich beispielsweise aus E.W. Duck, Encyclopedia of Polymer Science and Technology, Vol. 5, S. 801-856, John Wiley & Sons, New York (1966) und der dort zitierten Literatur. Weiterhin sei verwiesen auf F. Hölscher, Dispersionen synthetischer Hochpolymere, Teil 1, Springer Verlag Berlin, Heidelberg, New York (1969), und auf K.O. Calvert (Editor), Polymer Latices and their Applications, Applied Science Publishers Ltd., London (1982); A. Schmidt, Methoden der Organischen Chemie (Houben-Weyl), 4. Auflage, Bd. E 20, Makromolekulare Stoffe, Teil 1, S. 227-268, Stuttgart (1987).

Gemäß einer bevorzugten Ausführungsform der Erfindung verwendet man Phosphatsulfonate der allgemeinen Formel I bzw. IIa und IIb, in der $R^1$ einen sulfonierten Oleylrest, $R^2$ und $R^3$ Wasserstoff oder einen sulfonierten Oleylrest, n die Zahl 2 und x, y und z jeweils Zahlen im Bereich von 0 bis 20, insbesondere von 0 bis 10, bedeuten, sowie a, b und c wie oben definiert sind.

Der vorstehend verwendete Begriff "Ammoniumion" umfaßt auch protonierte Mono-, Di- und Tri-$C_1$-$C_4$-Alkyl- und -$C_1$-$C_4$-Hydroxyalkylamine. Bevorzugt sind jedoch Phosphatsulfonate der allgemeinen Formel I bzw. IIa und IIb, bei denen M ein Natriumion ist und $R^1$, $R^2$, $R^3$, a, b, c, n, x, y und z wie oben definiert sind.

Gemäß einer weiteren vorteilhaften Ausführungsform der Erfindung setzt man die Phosphatsulfonate der allgemeinen Formel I in einer Menge von 0,5 bis 10, insbesondere von 1 bis 5 Gew.-%, insbesondere 1 bis 3 Gew.-%, bezogen auf einzusetzende Monomere, ein. Besonders bevorzugt ist weiterhin der Einsatz der Phosphatsulfonate der allgemeinen Formel I in der Emulsionspolymerisation von olefinische Doppelbindungen aufweisenden, polymerisierbaren Monomeren, insbesondere von (Meth)acrylsäure und Derivaten derselben oder Vinylestern.

Obwohl die erfindungsgemäß zu verwendenden Phosphatsulfonate der allgemeinen Formel I sehr gute Eigenschaften aufweisen, wenn sie als einzige Emulgatoren eingesetzt werden, können sie auch zusammen mit weiteren anionaktiven Coemulgatoren eingesetzt werden.

Geeignet sind hier Paraffinsulfonate, Alkylbenzolsulfonate, Alkylnaphthalinsulfonate, Seifen linearer oder verzweigter, gesättigter oder ungesättigter Fettsäuren, Fettalkohol- und Synthesealkoholsulfate, Alkyldiphenyletherdisulfonate, Sulfobernsteinsäuremono- und -diester von linearen, verzweigten oder cyclischen Alkoholen sowie ganz allgemein Sulfate, Sulfonate, Sulfosuccinate, Isethionate, Phosphate und Ethercarbonsäuren der nachstehend genannten nicht-ionischen Emulgatoren. Beim Einsatz der erfindungsgemäß einzusetzenden Emulgatoren zusammen mit weiteren anionischen Emulgatoren ist es bevorzugt, die Gesamtemulgatormenge unter 5 Gew.-%, bezogen auf Monomere, zu halten.

Weiterhin ist es auch möglich, die erfindungsgemäß einzusetzenden Phosphatsulfonate in Kombination mit nicht-ionischen Coemulgatoren einzusetzen. Dies kann zu Dispersionen mit erhöhter Stabilität, z.B. gegenüber Scherkräften, Temperatureinflüssen und Elektrolyten führen. Die nicht-ionischen Emulgatoren werden dabei in Mengen von 0,5 bis 5, vorzugsweise 1 bis 3 Gew.-%, bezogen auf Monomere, zugegeben. Dabei ist es möglich, die nicht-ionischen Emulgatoren zu Beginn der Polymerisation vorzulegen oder sie im Verlauf der Polymerisation zuzudosieren. Eine weitere Variante sieht vor, eine Präemulsion unter Verwendung oder Mitverwendung der nicht-ionischen Emulgatoren herzustellen und diese im Verlauf der Polymerisation zuzudosieren. Es ist auch möglich, zur Nachstabilisierung der unter Verwendung der Phosphatsulfonate der allgemeinen Formel I erhaltenen Dispersionen diese mit nicht-ionischen Emulgatoren zu versetzen. Typische Beispiele für nicht-ionische Emulgatoren sind

- lineare, verzweigte, cyclische, gesättigte und ungesättigte Alkylpolyglykolether, insbesondere Fettalkoholpolyglykolether;
- Mono-, Di- und Trialkylarylpolyglykolether, insbesondere Octyl- und Nonylphenolpolyglykolether, Dinonylphenolpolyglykolether, Triisobutylphenolpolyglykolether;
- Arylpolyglykolether, z.B. Umsetzungsprodukte von Phenol mit 3 bis 10 mol Ethylenoxid;
- Polyglykolether von Hydroxyalkanolen, z.B. gemäß DE-A 33 19 782;
- endgruppenverschlossene Alkyl- oder Alkylarylpolyglykolether, z.B. gemäß DE-A 35 30 301 und DE-A 36 43 896;
- Carbonsäurepolyglykolester, insbesondere Fettsäurepolyglykolester;
- Fettsäurealkanolamid-ethylenoxid-Addukte, insbesondere Cocosfettsäuremonoethanolamid-Ethylenoxid-Addukte;
- Ethylenoxid/Propylenoxid-Blockpolymere;
- ethoxylierte Sorbitanester, insbesondere Sorbitanmonolaurat + 20 mol Ethylenoxid;
- ethoxylierte Fettamine.

Die erfindungsgemäß einzusetzenden Phosphatsulfonate der allgemeinen Formel I können auch zusammen mit Schutzkolloiden eingesetzt werden. Typische Beispiele für derartige Schutzkolloide sind vollständig oder teilweise verseifte Homo- und/oder Copolymere des Vinylacetats, z.B. teilverseiftes Polyvinylacetat, oder vollständig verseifte Copolymere aus Vinylacetat und Vinylethern. Bevorzugte Copolymere weisen 1 bis 4 Kohlenstoffatome im Etherteil des Polyvinylethers auf. Weitere Schutzkolloide können von Polysacchariden abgeleitet sein. So sind insbesondere Cellusoseether wie Hydroxyethylcellulose, Hydroxypropylcellulose, Carboxymethylcellulose, Methylcellulose, Ethylcellulose oder Cellulose-Mischether geeignet. Weiterhin geeignet sind Polyacrylamid sowie dessen Copolymere mit Acrylsäure, Acrylnitril oder Acrylestern. Auch Kondensationsprodukte aus Naphthalinsulfonsäure und Formaldehyd oder andere wasserlösliche Formaldehydharze, insbesondere Harnstoff-Formaldehyd-Harze, können verwendet werden. Schließlich sind Casein, Gelatine, Gummi arabicum sowie natürliche Stärke und substituierte Stärkederivate wie Hydroxyethylstärke geeignete Schutzkolloide.

Zusammen mit den erfindungsgemäß einzusetzenden Emulgatoren können auch sogenannte einpolymerisierbare Emulgatoren - besser als stabilisierende Monomere bezeichnet - eingesetzt werden. Hier sind beispielhaft Vinylsulfonat, Allylsulfonat, 2-Acrylamido-2-methylpropansulfonsäure, Vinylphosphonsäure sowie Acryl- und Methacrylester nicht-ionischer Emulgatoren oder Styrolsulfonsäure zu nennen.

Die Erfindung wird im folgenden anhand von bevorzugten Ausführungsbeispielen näher erläutert.

Zunächst werden die Herstellung von erfindungsgemäß zu verwendenden Phosphatsulfonaten der allgemeinen Formel I und die Prüfmethoden für die erfindungsgemäß erhaltenen Polymerdispersionen erläutert.

1. Geprüfte Phosphatsulfonate der allgemeinen Formel I (innenständig substituierte Oleylphosphatsulfonate).

a) Oleylphosphat-sulfonat-Na-Salz (aus Oleylalkohol mit einer Jodzahl von ca. 80)

b) Oleylphosphat-sulfonat-Na-Salz (aus Oleylalkohol mit einer Jodzahl von 108)

Die vorstehend genannten Oleylphosphatsulfonate werden im folgenden mit OPS 80 bzw. OPS 108 bezeichnet.

2. Herstellung der Oleylphosphatsulfonate.

a) OPS 80

Herstellung des Oleylphosphats:

In einem mit Rührer und Thermometer versehenen 1-l-Dreihalskolben wurden 420 g (1,5 Mol) technischer Oleylalkohol, der im Gemisch mit geringen Anteilen an Cetylalkohol vorlag (HD-Ocenol[R] 80/85: Jodzahl 89, OH-Zahl 205), vorgelegt. Bei einer Temperatur von 60 bis 70°C wurde mit Hilfe eines gegen Luftfeuchtigkeit geschützten Pulverdosiergerätes gleichmäßig innerhalb von 2 Stunden 71 g (0,5 Mol) Phosphorpentoxid eingetragen. Nach einer zweistündigen Nachreaktionszeit bei 70°C wurden 10 ml Wasser zugegeben und weitere 3 Stunden bei 90°C gerührt.

Es wurden 490 g eines dunkelfarbigen Öls erhalten, das folgende Kenndaten besaß:

| Monoester | 43,3 Gew.-% |
|---|---|
| Diester | 38,4 Gew.-% |
| Triester | 3,4 Gew.-% |
| $H_3PO_4$ | 1,7 Gew.-% |
| freier Alkohol | 13,0 Gew.-% |
| $H_2O$ (nach Fischer) | 0,15 Gew.-% |
| Jodzahl | 74 |
| mittleres Molekulargewicht | 451 |
| Doppelbindungsäquivalent pro Mol Phosphat | 1,3 |

Herstellung des Oleylphosphat-sulfonat-Na-Salzes:

In einem 1-l-Sulfierkolben mit mechanischem Rührer, Gaseinleitungsrohr und Mantelkühlung wurden 225 g (0,5 Mol) Oleylphosphat vorgelegt und bei 35°C mit 68 g (0,85 Mol) $SO_3$, entsprechend einem auf die Doppelbindungsäquivalente bezogenen 30 %-igem Überschuß, umgesetzt. Das $SO_3$ wurde durch Erhitzen aus einer entsprechenden Menge Oleum ausgetrieben, mit Stickstoff auf eine Konzentration von 5 Vol.-% verdünnt und innerhalb von 31 Minuten in den Phosphorsäureester eingeleitet, wobei die Temperatur des Reaktionsgemisches durch Kühlung auf Temperaturen unterhalb 50°C gehalten wurde. Nach der Sulfonierung wurde das Reaktionsgemisch auf 10°C gekühlt, in eine verdünnte Lösung von 40 g (1 Mol) NaOH in 700 ml Wasser eingerührt und anschließend 4 Stunden auf dem Dampfbad bei 95 bis 100°C hydrolysiert. Nach dem Abkühlen auf 20°C wurde der pH-Wert des Reaktionsgemisches durch Zugabe von HCl-Lösung auf 7,0 eingestellt.

Kenndaten des Produktes

| Aniontensid(Zweiphasentitrationsmethode nach Einheitsmethode DGF-H-III-10) | 16 Gew.-% = 0,30 mval/g |
|---|---|
| unsulfierte Anteile (DGF-GIII-6b) | 1 Gew.-% |
| $Na_2SO_4$ | 1 Gew.-% |
| $Na_3PO_4$ | < 0,1 Gew.-% |
| $H_2O$ (nach Fischer) | 82 Gew.-% |
| Gesamtschwefel | 1,2 Gew.-% |
| mittleres Molekulargewicht | 539 |
| Klett-Farbzahl | 135 |

b) OPS 108

Herstellung des Oleyl-phosphats

Der unter 2 a beschriebene Versuch zur Herstellung des Oleylphosphats wurde unter Einsatz von 420 g (1,5 Mol) eines technischen Oleylalkohols mit einer Iodzahl von 108 wiederholt. Es wurden ca. 485 g eines gelblichen Öls gewonnen.

Kenndaten des Produkts:

| Monoester | 42,9 Gew.-% |
|---|---|
| Diester | 38,2 Gew.-% |
| Triester | 3,2 Gew.-% |
| Phosphorsäure (frei) | 1,5 Gew.-% |
| Fettalkohol (frei) | 13,0 Gew.-% |
| Wasser (nach Fischer) | 0,10 Gew.-% |
| Jodzahl | 83 |
| Mittleres Molgewicht | 453 |
| Doppelbindungsäquivalent | 1,3 |

Herstellung des Oleyl-phosphat-sulfonat-Na-Salzes

Der unter 2 a beschriebene Versuch zur Herstellung des Oleylphosphat-sulfonat-Na-Salzes wurde unter Einsatz von 226 g (0,5 Mol) des vorstehend erhaltenen Oleyl-phosphats wiederholt.

Kenndaten des Produktes:

| Aniontensidgehalt | 15,9 Gew.-% = 0,029 mEq/g |
|---|---|
| Unsulfierte Anteile | 1 Gew.-% |
| Natriumsulfat | 1 Gew.-% |
| Natriumphosphat | 0,1 Gew.-% |
| Wasser | 82,1 Gew.-% |
| Mittleres Molgewicht | 541 |

3. Prüfmethoden für erfindungsgemäß erhaltene Polymerdispersionen.

a) Koagulatgehalt nach der Herstellung

Die fertiggestellte Dispersion und gegebenenfalls gebildete Beläge an Reaktionsgefäß und Rührer wurden durch einen tarierten Perlonsiebbeutel (Fa. Schwegmann) mit 80 Mikron Maschenweite gegossen. Der Siebbeutel mit gegebenenfalls vorhandenem Koagulat wurde 24 h bei 105°C getrocknet und das Koagulat durch Differenzwägung bestimmt.

b) Trockengehalt

Trockenrückstandbestimmungswaage (Fa. Sartorius), Typ 709301. Der Feststoffgehalt wurde bei Stufe 7 und 20 min Trockenzeit bestimmt. Die Einwaage betrug 5 g.

c) pH-Wert

Der pH-Wert wurde mit einem handelsüblichen pH-Meter bestimmt.

d) Viskosität

Die Viskosität wurde mit einem Brookfield-Viskosimeter vom Typ RVT bei 25°C (Spindel 1, 20 U.min$^{-1}$) gemessen.

e) Mindestfilmbildungstemperatur (MFT)

Die Bestimmung erfolgte mit einem Filmbildungs- und Blockpunktprüfgerät der Fa. Coesfeld gemäß DIN 53787.

f) Mechanische Stabilität

Die mechanische Stabilität der Dispersion wurde mit einem Klaxon-Rührer vom Typ HM 5 UB 2 unter Zusatz eines Entschäumers nach ASTM D 1706 getestet.

g) Schaumuntersuchung

Eine Prüfflüssigkeit, bestehend aus 50 g der Polymerdispersion und 450 g vollentsalztem Wasser wurde in einen 2 l-Meßzylinder mit Heizmantel überführt. Mit Hilfe einer Schlauchpumpe (Typ RG-L 85, Fa. Heidolph) wurde die Prüfflüssigkeit bei 25 ° C bei einer Durchflußmenge von 3 l/min in einen ständigen Umfluß gebracht. Die Prüfflüssigkeit wurde mit einem Glasrohr vom Boden des Meßzylinders angesaugt und über ein zweites Glasrohr in den Zylinder zurückgeführt. Nach max. 10 min wird der Umfluß beendet und das maximale Schaumvolumen (Gesamtvolumen) abgelesen. In Zeitabständen von 1, 2, 3, 5, 10 und 20 min wurde das Gesamtvolumen abgelesen, die ermittelten Werte wurden in ein Volumina/Zeit-Diagramm eingetragen.

Beispiel 1

Copolymerisation eines Vinylacetat/tert.-Monocarbonsäure-vinylester-Gemisches.

Der Monocarbonsäure-vinylester war ein handelsübliches Gemisch eines Vinylesters von isomeren synthetischen, gesättigten, im wesentlichen tertiären Monocarbonsäuren mit einer Kettenlänge von $C_{10}$, beschrieben in der Technischen Broschüre AES/VVX/4 (G), 3. Ausgabe, Oktober 1976, Herausgeber: Shell-Chemie, und wird im folgenden mit der auch dort verwendeten Abkürzung VeoVa 10 bezeichnet.

Die Copolymerisation wurde in einem geschlossenen, beheizbaren 2 l-Planschliffbecher mit V4A-Ankerrührer (Rührgeschwindigkeit 100 bis 150 U/min), Vorlagegefäßen und Rückflußkühler durchgeführt.

Es wurden zunächst getrennt die folgenden Reaktionskomponenten hergestellt:

Komponente I:

191,5 g vollentsalztes Wasser
1,3 g OPS 80 (100 % Aktivsubstanz)
0,5 g Kaliumperoxodisulfat (Starter)
0,2 g Borax (Puffer).

Komponente II:

282,3 g vollentsalztes Wasser
0,8 g OPS 80 (100 % Aktivsubstanz)
17,1 g eines handelsüblichen Addukts von 30 mol Ethylenoxid an Nonylphenol (70 % Aktivsubstanz; Coemulgator)
1,9 g Kaliumperoxodisulfat
2,1 g Borax.

Komponente III:

330,1 g Vinylacetat
143,5 g VeoVa 10
4,8 g Acrylsäure.

Zur pH-Einstellung:

23,9 g Ammoniumcarbonatlösung (10 %-ig).

Die Komponente I wurde im Reaktionsgefäß vorgelegt. Das Gefäß wurde unter Rühren 30 min mit Stickstoff gespült und anschließend auf 80 ° C aufgeheizt. Während der Aufheizphase wurde im Vorlagegefäß eine Präemulsion hergestellt, indem man die Komponente III unter Rühren der Komponente II zufügte. Nachdem eine Innentemperatur des Reaktors von 80 ° C erreicht war, wurde die Präemulsion innerhalb einer Zeitspanne von 2 Stunden zudosiert. Nach beendeter Zugabe wurde die Temperatur weitere 2 Stunden bei 80 ° C gehalten. Anschließend wurde die Dispersion abgekühlt. Der pH-Wert wurde mit der 10 %-igen Ammoniumcarbonatlösung auf ca. 7 eingestellt.

7

Beispiel 2

Herstellung eines Ethylacrylat/Acrylsäure-Copolymerisats.

Es wurden zunächst die folgenden Komponenten hergestellt:

Komponente I:

662,6 g vollentsalztes Wasser
3,2 g OPS 80
0,4 g NaOH (Plätzchen), gelöst in 8,7 g vollentsalztem Wasser.

Komponente II:

0,5 g Ammoniumperoxodisulfat, gelöst in 8,7 g vollentsalztem Wasser.

Komponente III:

8,0 g Wasserstoffperoxid (30 %-ig)

Komponente IV:

290,9 g Ethylacrylat
9,0 g Acrylsäure.

Zur pH-Einstellung:

8,0 g konz. Ammoniak.

Die Komponente I wurde in dem in Beispiel 1 beschriebenen Reaktionsgefäß vorgelegt. Das Reaktionsgefäß wurd 30 min mit Stickstoff gespült und anschließend auf 80°C aufgeheizt. Bei 70°C wurde die Komponente II zugegeben. Bei Erreichen einer Reaktorinnentemperatur von 80°C wurde die Komponente IV über einen Zeitraum von 60 min zudosiert. Nach weiteren 10 min erfolgte die Zugabe der Komponente III. Anschließend wurde die Temperatur weitere 40 min bei 86 bis 87°C gehalten. Die erhaltene Dispersion wurde abgekühlt. Der pH-Wert wurde mit konzentriertem Ammoniak auf ca. 8 eingestellt.

Beispiel 3

Herstellung eines Ethylhexylacrylat/Methylmethylcrylat/Methacrylsäure-Copolymerisats.

Es wurden zunächst die folgenden Komponenten hergestellt:

Komponente I:

195,6 g vollentsalztes Wasser
3,5 g OPS 80 (100 % AS)
0,3 g Kaliumperoxodisulfat
0,5 g Natriumhydrogencarbonat.

Komponente II:

245,6 g vollentsalztes Wasser
1,5 g OPS 80 (100 % AS)
6,2 g eines handelsüblichen Addukts von 20 mol Ethylenoxyd an Nonylphenol (80 % Aktivsubstanz, Coemulgator)
1,9 g Kaliumperoxodisulfat.

Komponente III:

225,4 g 2-Ethylhexylacrylat
254,8 g Methylmethacrylat
9,8 g Methacrylsäure.

Komponente IV:

4,8 g Kaliumperoxodisulfatlösung, 5 %-ig.

Zur pH-Einstellung:

50,0 g Natriumhydrogencarbonatlösung, 10 %-ig.

Die Komponente I wurde in dem in Beispiel 1 beschriebenen Reaktionsgefäß vorgelegt. Das Reaktionsgefäß wurde unter Rühren 30 min mit Stickstoff gespült und anschließend auf 75°C aufgeheizt. Während der Aufheizphase wurde im Vorlagegefäß die Präemulsion hergestellt, indem die Komponente III unter Rühren der Komponente II zugefügt wurde.

Bei Erreichen der Reaktorinnentemperatur von 75°C wurde die Monomer-Präemulsion über einen Zeitraum von 2 h zudosiert. Nach beendeter Zugabe wurde mit Kaliumperoxodisulfatlösung (Komponente IV) nachinitiiert und die Temperatur 1 h bei 85°C gehalten. Danach wurden die Dispersion abgekühlt und der pH-Wert mit einer 10 %-igen Natriumhydrogencarbonatlösung auf ca. 7 eingestellt.

Die Beispiele 1, 2 und 3 wurden jeweils mit der entsprechenden Menge OPS 108 wiederholt.

Die Prüfung der erhaltenen Polymerdispersionen ergab die in Tabelle 1 wiedergegebenen Ergebnisse (MFT = Mindestfilmbildungstemperatur). Die Ergebnisse der Schaummessungen sind in Tabelle 2 zusammengefaßt; die geprüften Phosphatsulfonate erwiesen sich als schaumarm.

Tabelle 1
Prüfung der erhaltenen Dispersionen

| Beispiel 1 | OPS 80 | OPS 108 |
|---|---|---|
| Koagulat (%) | 0,5 | 0,4 |
| Trockenrückstand (%) | 49,3 | 49,0 |
| Viskosität (mPa.s) | 120 | 123 |
| pH-Wert | 6,8 | 6,6 |
| MFT (°C) | 14-15 | 13-15 |
| mechanische Stabilität* | stabil | stabil |

* Zusatz 0,25 Gew.-% Dehydran G (handelsüblicher Entschäumer
für wäßrige Systeme)

| Beispiel 2 | OPS 80 | OPS 108 |
|---|---|---|
| Koagulat (%) | 0,9 | 1,2 |
| Trockenrückstand (%) | 29,6 | 29,5 |
| Viskosität (mPa.s) | 17,5 | 17,5 |
| pH-Wert | 8,1 | 8,3 |
| MFT (°C) | 0 | 3 |
| mechanische Stabilität* | 0,1 | 0,1 |

* Zusatz 0,25 Gew.-% Dehydran P4 (handelsüblicher Entschäumer
für wäßrige Systeme), Angabe Gew.-% Koagulat

| Beispiel 3 | OPS 80 | OPS 108 |
|---|---|---|
| Koagulat (%) | 0,1 | 0,2 |
| Trockenrückstand (%) | 50,2 | 50,1 |
| Viskosität (mPa.s) | 40 | 40 |
| pH-Wert | 7,4 | 7,2 |
| MFT (°C) | 34-36 | 34-36 |
| mechanische Stabilität | stabil | stabil |

Tabelle 2

| Ergebnisse der Schaummessung | | | | | | | |
|---|---|---|---|---|---|---|---|
| Komponente | Rezeptur | Gesamtvolumen | | | | | |
| | | 0' | 1' | 3' | 5' | 20' |
| OPS 80 | I | 1980 | 1940 | 1800 | 1600 | 600 |
| OPS 108 | I | 1960 | 1920 | 1820 | 1500 | 600 |
| OPS 80 | II | 800 | 400 | 400 | 380 | - |
| OPS 108 | II | 900 | 440 | 380 | 380 | - |
| OPS 80 | III | 1540 | 1400 | 1080 | 700 | 400 |
| OPS 108 | III | 1900 | 1600 | 700 | 600 | 400 |

**Patentansprüche**

1. Verwendung von Salzen von sulfonierten Alkenyl- bzw. Alkenyl(poly)oxyalkyl-phosphaten der Formel I

$$[R^1O\text{-}(C_nH_{2n}O)_x\text{-}][R^2O\text{-}(C_nH_{2n}O)_y\text{-}][R^3O\text{-}(C_nH_{2n}O)_z\text{-}]P = O \qquad (I)$$

in der
$R^1$ eine Gruppe der Formel II a bzw. II b

$$CH_3\text{-}(CH_2)_a\text{-}CH(OH)\text{-}(CH_2)_b\text{-}CH(SO_3M)\text{-}(CH_2)_c\text{-}CH_2\text{-} \qquad (IIa)$$

bzw.

$$CH_3\text{-}(CH_2)_a\text{-}CH(SO_3M)\text{-}(CH_2)_b\text{-}CH(OH)\text{-}(CH_2)_c\text{-}CH_2\text{-} \qquad (IIb)$$

oder ein durch Abspaltung eines Wassermoleküls aus der Gruppe der Formel IIa bzw. IIb gebildeter Rest ist,
$R^2$ und $R^3$, die gleich oder verschieden sein können, Wasserstoff oder einen Rest mit der für die Gruppe $R^1$ angegebenen Definition,
n die Zahl 2 und/oder 3,
x, y und z, die gleich oder verschieden sein können, Zahlen im Bereich von 0 bis 100, insbesondere von 0 bis 30,
a, b und c Zahlen im Bereich von 0 bis 18, wobei die Summe von a, b und c eine Zahl im Bereich von 12 bis 18 ist, und
M ein Alkali- oder Ammoniumion oder ein Äquivalent eines Erdalkaliions
bedeuten,
als Emulgatoren für die Emulsionspolymerisation.

2. Verwendung nach Anspruch 1, dadurch gekennzeichnet, daß in den Salzen der sulfonierten Alkenyl- bzw.
Alkenyl(poly)oxyalkyl-phosphate der allgemeinen Formeln I bzw. IIa und IIb $R^1$ einen sulfonierten Oleylrest, $R^2$ und $R^3$ Wasserstoff oder einen sulfonierten Oleylrest, n die Zahl 2 und x, y und z jeweils Zahlen im Bereich von 0 bis 20 bedeuten sowie a, b und c wie oben definiert sind.

3. Verwendung nach Anspruch 1 oder 2, dadurch gekennzeichnet, daß in den Salzen der sulfonierten Alkenyl- bzw.
Alkenyl(poly)oxyalkyl-phosphate der allgemeinen Formel I bzw. IIa und IIb M ein Natriumion ist und $R^1$, $R^2$, $R^3$, a, b, c, n, x, y und z wie oben definiert sind.

4. Verwendung nach mindestens einem der Ansprüche 1 bis 3, dadurch gekennzeichnet, daß man die Salze der sulfonierten Alkenyl- bzw. Alkenyl(poly)oxyalkylphosphate der allgemeinen Formel I in einer Menge von 0,5 bis 10, insbesondere von 1 bis 5 Gew.-%, bezogen auf einzusetzendes Monomer, einsetzt.

**5.** Verwendung nach mindestens einem der Ansprüche 1 bis 4, dadurch gekennzeichnet, daß man die Salze der sulfonierten Alkenyl- bzw. Alkenyl(poly)oxyalkyl-phosphate der allgemeinen Formel I in einer Menge von 1 bis 3 Gew.-%, bezogen auf einzusetzendes Monomer, einsetzt.

**Claims**

**1.** The use of salts of sulfonated alkenyl or alkenyl(poly)oxyalkyl phosphates corresponding to formula I

$$[R^1O\text{-}(C_nH_{2n}O)_x\text{-}][R^2O\text{-}(C_nH_{2n}O)_y\text{-}][R^3O\text{-}(C_nH_{2n}O)_z\text{-}]P = O \qquad (I)$$

in which
$R^1$ is a group corresponding to formula IIa or IIb

$$CH_3\text{-}(CH_2)_a\text{-}CH(OH)\text{-}(CH_2)_b\text{-}CH(SO_3M)\text{-}(CH_2)_c\text{-}CH_2\text{-} \qquad (IIa)$$

or

$$CH_3\text{-}(CH_2)_a\text{-}CH(SO_3M)\text{-}(CH_2)_b\text{-}CH(OH)\text{-}(CH_2)_c\text{-}CH_2\text{-} \qquad (IIb)$$

or a residue formed by elimination of one water molecule from the group corresponding to formula IIa or IIb,
$R^2$ and $R^3$ may be the same or different and represent hydrogen or a residue having the meaning defined for the group $R^1$,
n is the number 2 and/or 3,
x, y and z may be the same or different and represent numbers of 0 to 100 and, more particularly, 0 to 30,
a, b and c are numbers of 0 to 18, the sum of a, b and c being a number of 12 to 18, and
M is an alkali metal or ammonium ion or an equivalent of an alkaline-earth metal ion,
as emulsifiers for emulsion polymerization.

**2.** The use claimed in claim 1, characterized in that, in the salts of the sulfonated alkenyl or alkenyl(poly)-oxyalkyl phosphates corresponding to general formulae I or IIa and IIb, $R^1$ is a sulfonated oleyl group, $R^2$ and $R^3$ are hydrogen or a sulfonated oleyl group, n is the number 2 and x, y and z are numbers of 0 to 20 and a, b and c are as defined above.

**3.** The use claimed in claim 1 or 2, characterized in that, in the salts of the sulfonated alkenyl or alkenyl-(poly)oxyalkyl phosphates corresponding to general formulae I or IIa and IIb, M is a sodium ion and $R^1$, $R^2$, $R^3$, a, b, c, n, x, y and z are as defined above.

**4.** The use claimed in at least one of claims 1 to 3, characterized in that the salts of the sulfonated alkenyl or alkenyl(poly)oxyalkyl phosphates corresponding to general formula I are used in a quantity of 0.5 to 10% by weight and, more particularly, in a quantity of 1 to 5% by weight, based on the monomer to be used.

**5.** The use claimed in at least one of claims 1 to 4, characterized in that the salts of the sulfonated alkenyl or alkenyl(poly)oxyalkyl phosphates corresponding to general formula I are used in a quantity of 1 to 3% by weight, based on the monomer to be used.

**Revendications**

**1.** Utilisation de sels d'alkényl-phosphates ou d'alkényl(poly)oxyalkylphosphates sulfonés de la formule I

$$[R^1O\text{-}(C_nH_{2n}O)_x\text{-}][R^2O\text{-}(C_nH_{2n}O)_y\text{-}][R^3O\text{-}(C_nH_{2n}O)_z\text{-}]P = O \qquad (I)$$

dans laquelle
$R^1$ représente un groupe de la formule II a ou II b

$$CH_3\text{-}(CH_2)_a\text{-}CH(OH)\text{-}(CH_2)_b\text{-}CH(SO_3M)\text{-}(CH_2)_c\text{-}CH_2\text{-} \qquad (IIa)$$

ou

$$CH_3\text{-}(CH_2)_a\text{-}CH(SO_3M)\text{-}(CH_2)_b\text{-}CH(OH)\text{-}(CH_2)_c\text{-}CH_2\text{-} \qquad \text{(IIb)}$$

ou un radical formé par séparation d'une molécule d'eau du groupe formé des formules IIa ou IIb,

$R^2$ et $R^3$, qui peuvent être identiques ou différents, correspondent à l'hydrogène ou à un radical répondant à la définition donnée pour le groupe $R^1$,

n est le nombre 2 et/ou 3,

x, y et z, qui peuvent être identiques ou différents, représentent des nombres situés dans l'intervalle de 0 à 100, en particulier de 0 à 30,

a, b et c sont des nombres situés dans l'intervalle de 0 à 18, la somme de a, b et c représentant un nombre compris dans l'intervalle de 12 à 18 et

M représente un ion de métal alcalin ou d'ammonium ou un équivalent d'un ion de métal alcalino-terreux,

comme émulsifiants pour la polymérisation en émulsion.

2.  Utilisation selon la revendication 1, caractérisée en ce que dans les sels d'alkényl-phosphates ou d'alkényl(poly)oxyalkylphosphates sulfonés de la formule générale I ou des formules IIa et IIb, $R^1$ représente un radical oléyle sulfoné, $R^2$ et $R^3$ correspondent à l'hydrogène ou à un radical oléyle sulfoné, n est égal au nombre 2 et x, y et z sont chacun des nombres compris dans l'intervalle de 0 à 20, tandis que a, b et c répondent à la définition ci-avant.

3.  Utilisation selon la revendication 1 ou 2, caractérisée en ce que dans les sels d'alkényl-phosphates ou d'alkényl(poly)oxyalkylphosphates sulfonés de la formule générale I ou des formules IIa et IIb, M représente un ion sodium, tandis que $R^1$, $R^2$, $R^3$, a, b, c, n, x, y et z répondent à la définition ci-avant.

4.  Utilisation selon au moins une des revendications 1 à 3, caractérisée en ce que l'on met en oeuvre les sels des alkényl-phosphates ou alkényl(poly)oxyalkylphosphates sulfonés de la formule générale I dans une proportion de 0,5 à 10, en particulier de 1 à 5 % en poids, par rapport au monomère à utiliser.

5.  Utilisation selon au moins une des revendications 1 à 4, caractérisée en ce que l'on met en oeuvre les sels des alkényl-phosphates ou alkényl(poly)oxyalkylphosphates sulfonés de la formule générale I dans une proportion de 1 à 3 % en poids, par rapport au monomère à utiliser.